# EUROPEAN PATENT APPLICATION

(11) **EP 3 862 220 A1**
(43) Date of publication of application: **11.08.2021**
(21) Application number: 20020612.6
(22) Date of filing: 14.12.2020
(51) Int. Cl.: B60N 2/00, B60R 21/015, B60Q 5/00, G08B 21/22

(54) **DEVICE AND PROCEDURE FOR DETECTING THE PRESENCE OF A CHILD ON A CAR SEAT**

(30) Priority: 06.02.2020 IT 202000002305
(71) Applicant: Di Bella, Nicolò, 10098 Rivoli (TO) (IT)
(72) Inventor: Di Bella, Nicolò, 10098 Rivoli (TO) (IT)

(57) **Abstract**

Device (1) for detecting the presence of a child on a car seat (6) of a vehicle (10) comprising:
- a child weight sensor (2) usually opened arranged to be placed on said car seat (6),
- an adult weight sensor (4), connected to said child weight sensor (2) in a circuit (50), said adult weight sensor (4) being usually closed and being arranged to be placed on a driver seat (8) of said vehicle (10);
- a current generator (16), connected to said sensors (2, 4) and arranged to make a current circulate into said circuit (50) further to the closure of the adult weight sensor (4);
- a current sensor (18) arranged to detect the presence of said current and to send an activation signal to an alarm system (12), wherein said alarm system (12) comprises an acoustic signaling device, and a visual signaling device connected in parallel to the acoustic device.

## Description

The present invention concerns a device and a procedure for detecting the presence of a child on a car seat.

In detail, this invention consists in a device and in a procedure that can monitor the child's presence in the moment the vehicle driver stands up from the driver's seat and leaves the vehicle at the end of the trip.

As we know, in order to carry children on a vehicle, they must be seated on special seats to be placed on the back seat of the vehicle.

It happens, unfortunately, that the parent or whoever is driving the vehicle, after reaching the destination, forgets the child on the seat when leaving the vehicle.

In some cases this can cause the child's death, especially if the child remains for many hours inside the closed car, particularly during the summer or in particularly warm atmospheric conditions.

We know devices that warn the driver about the child's presence on the seat when the driver leaves the vehicle to prevent the child to be left on the vehicle at the end of the journey.

In particular, the known alarm systems send the driver an acoustic signal when he is leaving the vehicle.

These alarms, anyway, may not be heard by the driver, possibly because they are adjusted on a volume level not appropriate for him (for instance elderly or deaf persons, who have hearing levels below the average of the population).

Sometimes, a failure in the alarm system compromises its operation.

Therefore it is necessary to have a device that alerts the driver on the child's presence on the seat when the driver leaves the vehicle, that is immediately perceived and is highly reliable, even in case of default of the sound alarm.

Object of this invention is to have a device and a process to monitor a child's presence on a car seat which can monitor the child's presence, when the driver is going to leave the vehicle, immediately and which operates even if the sound alarm system is out of operation.

This and other objects are obtained with a device for detecting the presence of a child on a car seat of a vehicle, the characteristics of which are defined in claim 1, and with a procedure to monitor the presence of a child on a seat of a vehicle as indicated in claim 6.

Actual embodiments are the object of dependent claims, the content of which is to be considered as an integral part of this description.

Further characteristics and advantages of this invention are shown in the following detailed description, to be considered as a mere not restrictive example, with reference to the attached drawings:
Figure 1 is a section view of a vehicle provided with a device as per this invention;
Figure 2 is a circuit diagram of the device in figure 1;
Figure 3 shows the circuit illustrated in figure 2 during the journey;
Figure 4 shows the circuit illustrated in figure 2 at arrival to destination; and
Figure 5 shows a block diagram of the procedure steps according to this invention.

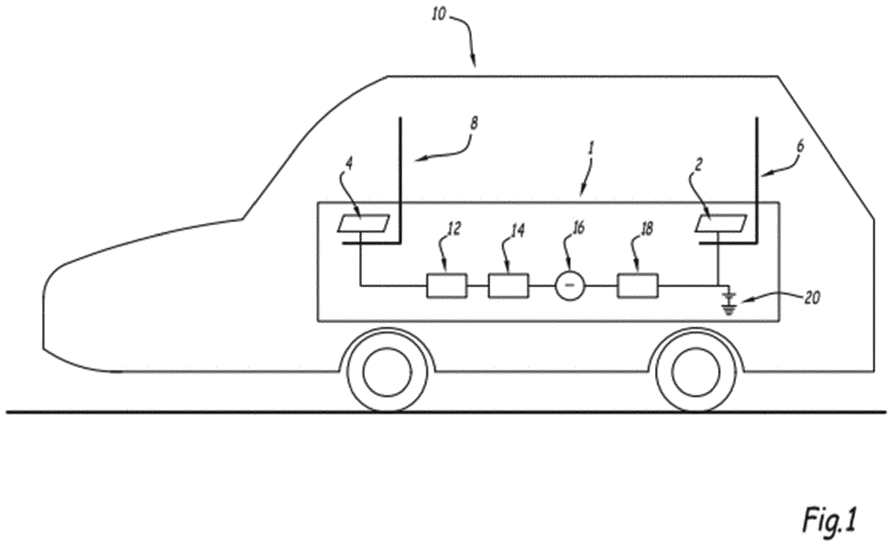

Reference 1 in figure 1 shows a child presence detection device on a vehicle seat according to this invention.

Device 1 comprises a child weight sensor 2 and an adult weight sensor 4 suitable to be positioned respectively on a seat 6 for sitting a child and on a driver seat 8 of a vehicle 10.

The child weight sensor 2 comprises a switch of a type known as a "normally open switch". Here below as "normally open" we indicate a switch which is open in the off position and it closes in presence of a weight on it.

The adult weight sensor 4 comprises a switch of a type known as "normally closed". Here below as "normally closed" we indicate a switch which is closed in the rest condition and opens in presence of weight on it.

Alternatively, the two types of sensors are inverted in the child weight sensor 2 and in the adult weight sensor 4 respectively located on child seat 6 and on driver's seat 8.

The two child weight sensor 2 and adult weight sensor 4 are connected each other in series in a known way, and they are further connected to an alarm system 12, to a timer 14, to a current generator 16 and to a current sensor 18, in order to generate a circuit 50.

In a preferred variation of this invention the alarm system 12 comprises the vehicle horn 10 and a visual signaling device connected in parallel, preferably a LED located inside the vehicle 10. Alternatively, the alarm system 12 comprises a visual signaling device, preferably a LED, located inside the vehicle 10 and connected in parallel to an already known incremental alarm device: this sounds at a "variably adjustable" volume, for instance at a first volume level for a first time period t1, then at a second volume, lower than the first volume for a second time period t2 higher than the first period t1, then with an incremental growing volume for a third time period t3, longer than the second period t2.

Alternatively, the alarm system 12 comprises the vehicle horn 10 as well as the incremental alarm device connected in series each other, where the incremental alarm device is connected in parallel to the visual signaling device. The visual signaling device also is connected in parallel to the vehicle horn 10.

According to this invention, device 1 also comprises a supply battery 20 to feed all components connected to circuit 50, to be independent of starting and powering the vehicle (key-on).

This battery 20 is connected in parallel to a charge level detector already known and not shown in the figure and connected to a further light signaling device, preferably a LED. The charge level detector is preset to detect when the battery 20 charge level decreases below a preset level and to signal it by a light signal.

Actually device 1 must be able to operate especially in the case, almost frequent, that the driver leaves the driver's seat 8, and removes the key from the dashboard. At this moment all components of circuit 50 must be powered to be able to operate correctly.

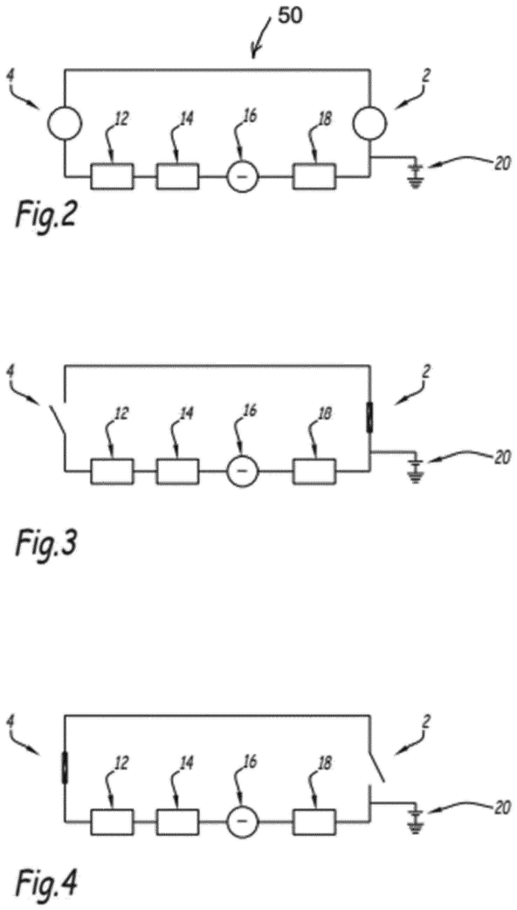

Figure 2 shows the diagram of circuit 50 of device 1 where all the shown elements are identified by the same reference numbers as indicated above with reference to the single components.

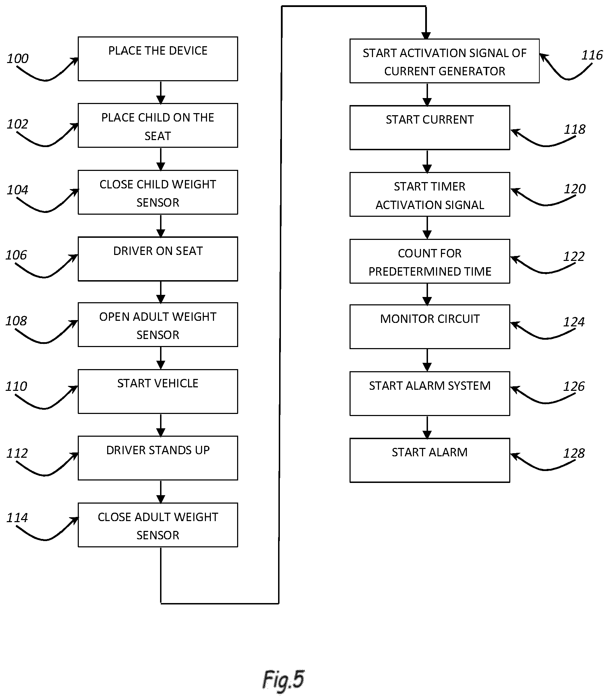

We will now describe, with reference to figure 5, the process to detect the presence of a child on the seat of a vehicle with the present invention. In the first step 100, the above described device 1 is placed on the vehicle 10.

Before using vehicle 10, both child weight sensor 2 and adult weight sensor 4 are in the respective rest conditions, that is open and closed, thus circuit 50 is open.

At the moment of leaving, in step 102 the child is seated on seat 6 and the child weight sensor 2 closes in a further step 104, as device 1 is powered by its battery 20.

In an invention variation, after the closure of child weight sensor 2, the alarm system 12 generates a first alarm signal, in particular a sound and light signal through the light signal device. The first alarm signal reminds the driver that the child has been seated on the seat.

In this case, preferably, the alarm system 12 comprises the incremental alarm device and/or is at variable volume, to allow a gap of initial acoustic tolerability for the driver.

Circuit 50 is therefore temporarily closed.

Afterwards, in step 106, the driver sits on driving seat 8 and the adult weight sensor 4 opens in a subsequent step 108. Now the first alarm signal stops.

Circuit 100 goes back to the open circuit condition, as shown in figure 3, that will be maintained for the whole journey of the vehicle 10.

Now, in step 110, the vehicle is started for a journey.

Upon arrival to destination, as soon as the driver stands up from the driver's seat 8 in step 112, the adult weight sensor 4, in step 114, goes back to the rest position and closes.

Circuit 50 goes to the condition of closed circuit as shown in figure 4.

The closure of adult weight sensor 4, when the driver stands up, generates, in step 116, an activation signal for current generator 16 which, in step 118, starts circulating a current in circuit 50.

In a variation of this invention, to the adult weight sensor 4 a *wireless* transmitter is associated which, upon closure of sensor 4, sends the activation signal to a receiver associated to the current generator 16.

Alternatively, the current generator 16 is always powered by the battery 20 and, upon closure of the adult weight sensor 4, the current starts flowing in circuit 50. In this case, favourably, the load level monitor of battery 20 provides, in a known way, a signal of the battery charge level, in order to allow charging when this value goes below the stated threshold.

Preferably, the battery 20 is recharged by the vehicle generator 10.

The closure of the adult weight sensor 4 also generates, in step 120, an activation signal for timer 14, preferably in *wireless* mode, as described above as to the activation of current generator 16.

Now, in step 122, timer 14 starts counting for a preset time interval T1, preferably 20 seconds; at the end of this, current sensor 18,in step 124, monitors circuit 50 and, if it detects a current presence, at step 126, it sends an activation signal to the alarm system 12.

Actually, if after the described time gap current is still present in circuit 50, this means that the child weight sensor switch 2 has not opened, and on turn this means that the child has not been picked up from seat 6.

The alarm system 12 then generates, in step 128, in a known way, a second alarm signal.

If the alarm system 12 comprises the horn, this starts sounding (giving out an acoustic signal) immediately.

If the alarm system 12 comprises the incremental alarm device, this starts sending a sound or an acoustic signal of growing intensity.

In both cases, the light signal device starts sending a light signal inside the vehicle 10.

If the alarm system 12 comprises the horn as well as the incremental alarm device (and the light signal device), the incremental alarm device starts sending a sound with growing intensity for a preset time gap, for instance 10 seconds, at the end of which the horn is activated. The light signal device is activated immediately in parallel to the activation of the incremental alarm device (or of the horn, in lack of the incremental alarm device) and remains active as long as any of the sound alarms is active.

Device 1, according to the present invention, allows to effectively monitor a child's presence on a seat after the driver has left the driver's seat 8. The alarm generation is subject to the fact that a child remains on the seat 6 when the driver has left his seat, independently of vehicle starting 10.

Of course, once stated the principle of this invention, the embodiments and realization particulars can possibly be widely changed with respect to what has been described and illustrated as a mere non limiting example, without, for these reasons, exceeding the protection limits of this invention, defined by the enclosed claims.

## Claims

1. Device (1) for detecting the presence of a child on a car seat (6) of a vehicle (10) comprising :
- a child weight sensor (2) usually opened arranged to be placed on said car seat (6);
- an adult weight sensor (4), connected to said child weight sensor (2) in a circuit (50), said adult weight sensor (4) being usually closed and being arranged to be placed on a driver seat (8) of said vehicle (10);
- a current generator (16), connected to said sensors (2, 4) and arranged to make a current circulate into said circuit (50) further to the closure of the adult weight sensor (4);
- a current sensor (18) arranged to detect the presence of said current and to send an activation signal to an alarm system (12), wherein said alarm system (12) comprises - an acoustic device arranged to emit an acoustic signal, and - a visual signalling device connected in parallel to the acoustic device and arranged to emit a visual signal.

2. Device according to claim 1, wherein the acoustic signal device is a vehicle (10) horn.

3. Device according to claim 1, wherein the acoustic signal device is an incremental alarm device.

4. Device according to claim 1, wherein the acoustic signal device includes the vehicle (10) horn and an incremental alarm device connected in series to each other.

5. Device according to claim 1, further including a timer (14) arranged to count for a predetermined time interval before the current sensor (18) detects said current.

6. Method for detecting the presence of a child on a car seat (6) of a vehicle (10) comprising the steps of:
- providing (100) a device (1) according to any of the preceding claims;
- placing (102) a child on a car seat (6) so that the child weight sensor (2) closes (104);
- making a driver seat (106) on the driver seat (8) so that the adult weight sensor (4) opens (108);
- starting (100) the vehicle (10);
- rising (112) the driver so that the adult weight sensor (4) closes;
- generating (116) a current in the circuit (50);
- detecting (120) a current in the circuit (50),
- emitting (128) an alarm signal including an acoustic signal and a visual signal.

7. Method according to claims 6, where the device (1) includes also a timer (14) able to count for a pre-determined period of time before that the current sensor (18) detects the presence of the current, the proceeding further comprising the step of counting (120) for a predetermined time interval (T1) before detecting (122) said current.
